# EUROPÄISCHE PATENTSCHRIFT

(11) **EP 0 694 981 B1**
(45) Veröffentlichungstag und Bekanntmachung des Hinweises auf die Patenterteilung: **07.01.1998**
(21) Anmeldenummer: 95106833.7
(22) Anmeldetag: 05.05.1995
(51) Int. Cl.: H01M 4/52

(54) **Gasdicht verschlossener alkalischer Akkumulator in Form einer Knopfzelle**
Alkaline gastight accumulator in the shape of a button cell
Accumulateur alcalin étanche ayant une forme de type "bouton"

(30) Priorität: 29.07.1994 DE 4426970
(43) Veröffentlichungstag der Anmeldung: 31.01.1996
(73) Patentinhaber: VARTA Batterie Aktiengesellschaft, 30419 Hannover (DE)
(72) Erfinder: Köhler, Uwe, Dr., D-65779 Kelkheim (DE); Klaus, Christoph, D-73479 Ellwangen (DE); Hofmann, Günter, D-65719 Hofheim (DE); Lichtenberg, Frank, Dr., D-67378 Zeiskam (DE)
(74) Vertreter: Kaiser, Dieter Ralf, Dipl.-Ing.

(56) Entgegenhaltungen:
- EP-A- 0 523 284
- EP-A- 0 557 522
- US-A- 5 077 149

## Beschreibung

Die Erfindung betrifft einen gasdicht verschlossenen alkalischen Akkumulator in Form einer Knopfzelle mit im Zellengehäuse angeordneten, durch einen Separator getrennten positiven und negativen Elektroden.

Das Gehäuse einer Knopfzelle wird von einem napfförmigen Unterteil und einem Deckel aus vernickeltem Stahlblech gebildet. Das Unterteil nimmt die positive Elektrode auf, dann folgt ein laugebeständiges Kunststoffmaterial als Separator; auf diesem liegt die negative Elektrode. Die Elektroden und der Separator sind mit Elektrolyt getränkt. Zwischen negativer Elektrode und dem Deckel liegt eine Feder, die einen engen Kontakt der Elektroden mit dem Zellgefäß herstellt. Der Zellennapf und der Deckel sind durch einen Kunststoffring gegeneinander isoliert. Durch Umbördeln und Festpressen des Napfrandes wird ein einwandfrei dichtender Verschluß erreicht.

Abgesehen von ihrer speziellen Bauart, die sie von Rundzellen unterscheidet, sind Knopfzellen stets für kleine Kapazitäten bis zu etwa 1 Ah ausgelegt. Wegen der geringen Baugröße finden sie vielseitige Verwendung in der Elektronikindustrie.

Die Elektroden von Knopfzellen sind typischerweise Masse-Elektroden. Diesen liegt stets eine Trockenmischung des jeweiligen Aktivmaterials -Nickelhydroxid im Falle der positiven Elektrode- gegebenenfalls mit Zusätzen eines Leit- und eines Bindemittels zugrunde. Aus der Trockenmischung werden Preßpulvertabletten hergestellt und diese schließlich, wie von Knopfzellen des Ni/Cd-Typs bekannt, zum Zwecke der Armierung des Preßlings und einer verbesserten Stromableitung in ein Körbchen aus Nickeldrahtgewebe eingepreßt.

Während die fortschreitende Miniaturisierung bei den Knopfzellen verständlicherweise auch höhere Anforderungen an die volumenbezogene elektrochemische Speicherkapazität stellt, stoßen die derzeit verfügbaren Ni/Cd- und Ni/Metallhydrid-Knopfzellen hinsichtlich der volumetrischen Energiedichte an eine Grenze ihrer Möglichkeiten. Dies liegt an der Tatsache, daß das verwendete Nickelhydroxid aufgrund seiner Komgröße und -verteilung nur eine Masseausnutzung von etwa 80% des theoretischen Wertes, nämlich ca. 230mAh/g gegenüber 289mAh/g, erlaubt. Entsprechend liegt die auf das Elektrodenvolumen bezogene volumetrische Ausnutzung nur bei Werten von ca. 300mAh/cm³.

Das heute bei Knopfzellen eingesetzte Nickelhydroxidpulver wird aus einem Fäll- und Trocknungsprozeß als ein zunächst klumpiges Material gewonnen, welches nach anschließendem Vermahlen ein Pulver mit einer Komgrößenverteilung von 30 bis 300µm ergibt.

Da für die Herstellung von positiven Knopfzellenelektroden neben Nickelhydroxid als eigentlicher aktiver Elektrodenmasse weitere Additive notwendig sind, deren mittlere Partikelgröße von 1 bis 5µm deutlich unter derjenigen der Nickelhydroxidpartikel liegt, ist eine gleichmäßige Dichteverteilung aller Komponenten durch Mischen und nachfolgendes Verdichten durch Pressen schwierig.

In den US-A-4844999 und 4985318 wird ein Nickelhydroxid-Pulver zur Verwendung für Pasten-Elektroden offenbart, welches ein Gesamt-Porenvolumen von nur 0,05ml/g aufweisen soll, wobei die Porenradien des Pulvers zwischen 15 und 30Å liegen. Aufgrund dieser Angaben sowie aufgrund seiner spezifischen Oberfläche von 15 bis 30m²/g läßt sich auf eine verhältnismäßig hohe Dichte und Feinteiligkeit dieses bekannten Materials schließen.

Es entspricht indessen auch der Erfahrung, daß man durch weiteres Nachmahlen eines konventionellen Nickelhydroxidpulvers auf Komgrößen < 20µm eine Erhöhung der Masseausnutzung erzielen kann, indem die zur elektronischen Ableitung untergemischten Pulver nunmehr feiner und gleichmäßiger verteilt werden, so daß die elektronische Anbindung der Ni(OH)₂-Massepartikel verstärkt ist und zusätzlich solche Bereiche in der Elektrode erschlossen werden, die sonst dem Elektronentransfer nicht zugänglich waren. Dabei müssen jedoch andere Nachteile in Kauf genommen werden.

Der Erfindung liegt die Aufgabe zugrunde, einem gemäß Anspruch 1 gasdicht verschlossenen alkalischen Akkumulator in Form einer alkalischen Knopfzelle insbesondere des Ni/Hydrid-Systems, anzugeben, welche gegenüber derzeit handelsüblichen Knopfzellen gleicher Bauart eine deutlich verbesserte Speicherkapazität besitzt.

Diese Aufgabe wird erfindungsgemäß mit einem Nickelhydroxidpulver mit sphärischer Teilchenform und hoher Festkörperdichte, welches trocken verpreßt ist und das aktive Material der positiven Elektrode bildet, gelöst.

Die pyknometrische Dichte des erfindungsgemäßen Nickelhydroxidpulvers liegt über 3,3g/cm³ bei einer Obergrenze von 3,9g/cm³. Die Partikelgrößen sind mehrheitlich auf den Bereich 5 bis 20pm, im günstigsten Fall auf den Bereich 10µm bis 15µm verteilt. Sie erreichen damit nahezu die gleiche Größenordnung der Partikelgrößen der bereits erwähnten Zusatzstoffe, die bei 1 bis 5µm liegen. Dadurch wird im Gemisch mit diesen eine homogenere Verteilung und bessere Raumausnutzung erzielt.

Als negative Elektrodenmaterialien für die erfindungsgemäß bevorzugten Ni/Hydrid-Knopfzellen kommen vor allem Wasserstoffspeicherlegierungen, darunter solche vom LaNi₅-Typ oder TiNi-Typ infrage. Bevorzugt sind Legierungen des LaNi₅-Typs, bei denen Lanthan und/oder andere Seltenerdelemente die Mischmetallkomponente von MmNi₅-Legierungen bilden. Eine beispielhafte Legierung hat die Zusammensetzung MmNi_{4,3-x}CoₓMn_{0,3}Al_{0,4}, wobei 0,2 < x < 0,7.

Typische Massemischungen für die positive Elektrode enthalten neben Nickelhydroxid metallisches Nickel und Kobalt, Graphit sowie Kobaltoxid. Diese Zusatzstoffe wirken vorwiegend als Leitmaterial; das Kobaltoxid sorgt zusätzlich für eine Erhöhung der Sauerstoffüberspannung an der positiven Elektrode und damit für eine Erhöhung der Ladeeffektivität.

Um die mechanische Festigkeit beim Pressen der Trockenmasse zu verbessem, wird vorteilhafterweise zusätzlich ein pulverförmiger Kunststoffbinder, z.B. Polytetrafluorethylen (PTFE), Polyethylen (PE), Polypropylen (PP) oder Polyvinylidenfluorid (PVDF) zugegeben.

Eine typische Massemischung besteht z.B. aus:
3 bis 10Gew.% CoO
2 bis 10Gew.% Co_{met.}
20 bis 50Gew.% Ni_{met.}
0,5 bis 3Gew.% Kunststoffbinder
Rest bis 100Gew.% Ni(OH)₂

Der Schwankungsbereich des Ni(OH)₂-Anteils reicht etwa von 40Gew.% bis 70Gew.%.

Durch ein Nickelhydroxid mit sphärischer Komgestalt und gleichzeitig hoher Festkörperdichte (vorzugsweise > 3,5 g/cm³) ist es erfindungsgemäß möglich, dank der gleichmäßigen und glatten Kornoberflächen sowie dank optimaler Komgrößenverteilung eine hohe Packungsdichte zu erreichen.

Im Hinblick auf die Verarbeitbarkeit der Massen ist es besonders vorteilhaft, die obengenannten Massemischungen vor dem trockenen Verpressen zu Tabletten zu granulieren. Dabei werden Massekonglomerate der Partikelgröße 100µm bis 1000µm erzeugt, die sich wegen ihrer Fließfähigkeit hervorragend dosieren lassen. Die größeren Partikel verhindern zudem, daß Masse aus dem Nickelnetz-Körbchen abschlammt. Die Gefahr der Separatordurchdringung wird gleichfalls reduziert.

Ein ähnlicher Erfolg läßt sich mit einem marktgängigen Nickelhydroxidpulver der Partikelgröße 50 bis 300µm selbst dann nicht erzielen, wenn dieses bis auf eine Komfeinheit von ca. 20µm nachgemahlen wird, weil die Partikel des nachgemahlenen Produkts nach wie vor unregelmäßige Oberflächen besitzen, so daß sie sich beim Kompaktieren einer optimalen Raumfüllung widersetzen. Der Erfolg des Einsatzes einer aus grobkömigem Standardmaterial nachgemahlenen positiven Masse für Elektroden mit hoher Dichte und hoher volumenbezogener Kapazität bleibt somit begrenzt.

Zwar ist durch besagtes Nachmahlen des Standard-Nickelhydroxidpulvers eine gewisse Steigerung der Masseausnutzung möglich; auch wird bei der Herstellung der Elektrodenmassen der Abstand zwischen den elektrochemisch aktiven Teilen und dem metallischen Leitgerüst kleiner und die Belastungsfähigkeit damit besser. Bei Zellen, die ein derartiges Nickelhydroxidpulver mit einem Partikelspektrum von 50 bis 300µm enthalten, stellt sich jedoch ein irreversibler Kapazitätsverfall ein, wenn diese unter Kurzschlußbedingungen längere Zeit, besonders bei hohen Temperaturen, gelagert werden. Nur im Falle der Verwendung von Nickelhydroxidpulver mit Korngrößen < 20µm bleibt der Kapzitätsverlust aus.

Diesen Vorteilen feingemahlenen Standard-Nickelhydroxids steht jedoch die Gefahr gegenüber, daß beim Betrieb der Zelle, insbesondere bei zyklischer Lade-/ Entladebehandlung und bei anhaltender Überladung, sich einzelne Massepartikel von der positiven Elektrode lösen und auf diese Weise langsam eine Kurzschlußverbindung zur negativen Elektrode aufbauen. Ein etwa 0,2mm dicker offenporiger Separator aus faserförmigem Vliesmaterial und mit einer Porenweite von etwa 100 bis 300µm, wie er heute üblicherweise in Knopfzellen verwendet wird, vermag diese Wanderung der Massepartikel nicht zu verhindern, so daß es zum Ausfall der Zelle kommt.

Auch die sphärischen Partikel des erfindungsgemäß eingesetzten Nickelhydroxids werden aufgrund ihrer Feinheit von herkömmlichen Scheidern ebensowenig an deren Durchdringung gehindert wie das nachgemahlene Standardmaterial. Als wirksame Abhilfe hat sich in beiden Fällen ein mikroporöses Scheidermaterial in Form von PE- oder PP-Membranen erwiesen, dessen offene Poren einen kleineren Durchmesser als die zwischen 5 und 20µm liegenden Teilchengrößen besitzen. Daher werden die positiven Nickelhydroxidelektroden aus feinteiligem Material vorzugsweise in Verbindung mit einem kurzschlußsicheren mikroporösen Separator verwendet. Dabei ist die Kombination eines solchen Separators mit dem feinteiligen sphärischen Ni(OH)₂ wegen dessen besserer Raumausnutzung wesentlich vorteilhafter als die entsprechende Kombination mit einem nachgemahlenen Standardmaterial.

Anhand einiger Figuren werden die vorteilhaften Eigenschaften eines Knopfzellen-Akkumulators mit positiven Elektroden aus sphärischem Nickelhydroxidpulver verdeutlicht.
- Figur 1: zeigt einen Ni/Hydrid-Akkumulator gemäß der Erfindung im Schnitt.
- Figur 2a: zeigt schematisch ein fertigungsübliches Nickelhydroxidpulver und
- Figur 2b: ein Nickelhydroxidpulver mit sphärischem Kom.
- Figur 3: zeigt eine Partikelgrößen-Verteilung von Nickelhydroxid-Pulver mit sphärischem Korn.
- Figur 4: zeigt spezifische Volumenkapazitäten von Pulverpreßelektroden aus Nickelhydroxid mit sphärischem Kom und aus konventionellem Nickelhydroxid.

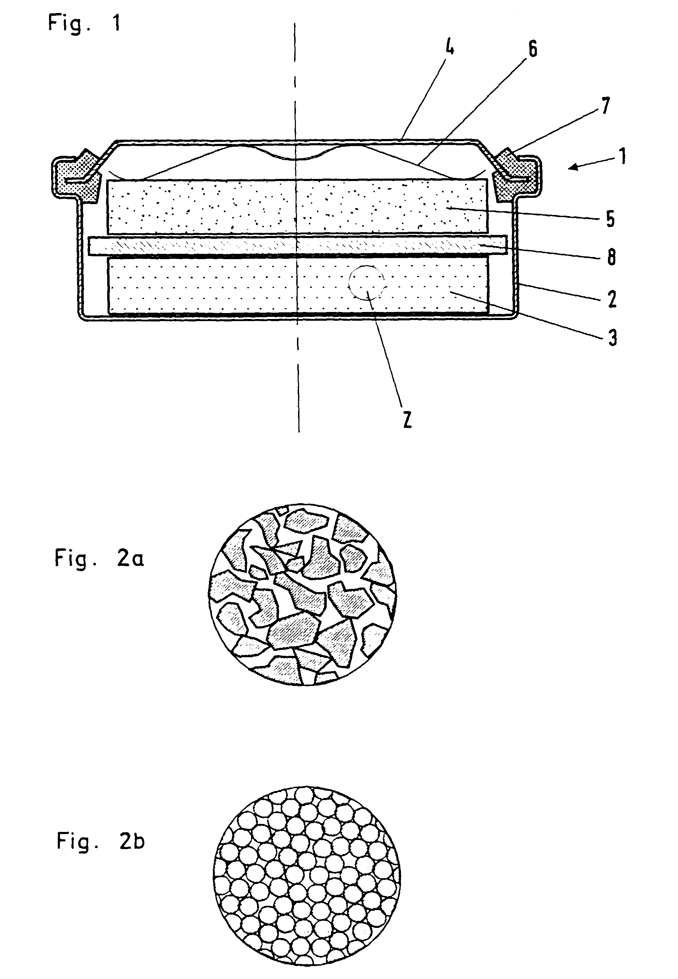

Nach Figur 1 umfaßt der konventionell aufgebaute Knopf-Akkumulator 1 das napfförmige Unterteil 2, welches die positive Elektrode 3 mit Nickelhydroxid von sphärischer Partikelgestalt enthält, das Deckelteil 4, welches die negative Elektrode 5 aus einem gepreßten Legierungspulver mit Wasserstoffspeichervermögen nebst einer Kontaktfeder 6 aufnimmt, einen Dichtungsring 7 sowie einen Separator 8.

Aus den Figuren 2a und 2b geht der Einfluß der Morphologie der Nickelhydroxidpartikel auf die Raumerfüllung der positiven Preßpulvertablette hervor, dabei zeigen die Figuren stark vergrößert den Teilbereich Z der positiven Elektrode der Figur 1.

Wegen der unregelmäßigen Gestalt der Partikel im üblicherweise verwendeten Nickelhydroxid (Figur 2a) verbleibt nach dem Pressen ein erhebliches Totvolumen in der positiven Elektrode 3.

Demgegenüber begünstigt die gleichmäßige und glatte Gestalt der sphärischen Komoberflächen, verbunden mit einer optimal eingestellten Partikelgrößenverteilung, eine hohe Packungsdichte (Figur 2b). Durch Verwendung von sphärischen Nickelhydroxidpartikeln wird das Elektrodenvolumen daher wesentlich besser ausgenutzt als dies mit einem Ni(OH)₂-Material mit unregelmäßiger Komoberfläche möglich ist.

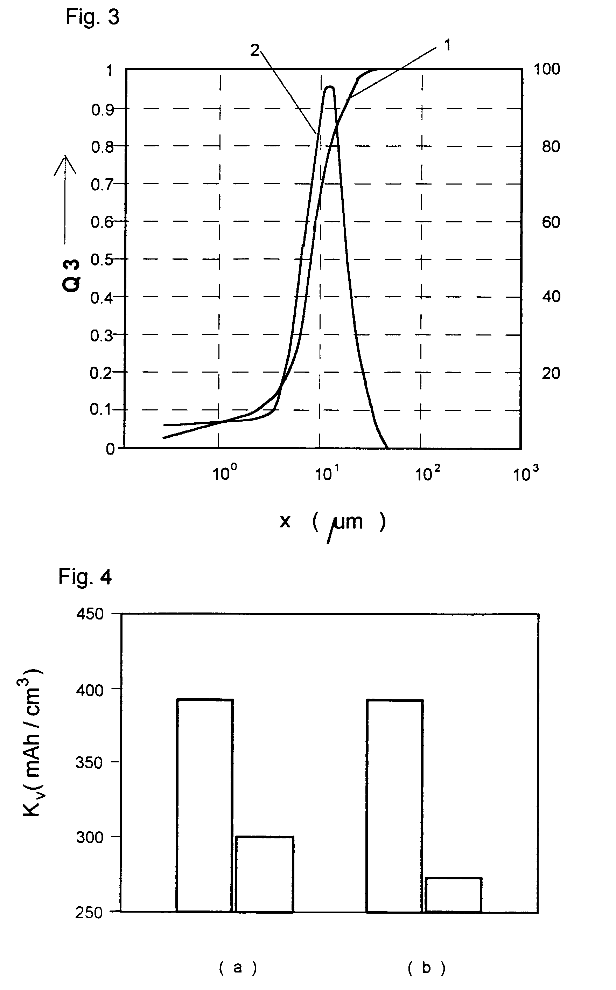

Im Volumenverteilungsdiagramm nach Figur 3 ist durch die Summenkurve 1 die Aufteilung des Gesamtvolumens des sphärischen Ni(OH)₂-Pulvers (Summenverteilung Q3) in Abhängigkeit von der Partikelgröße x[µm] dargestellt. Man entnimmt der Kurve jeweils für eine ausgewählte Partikelgröße x, welcher Bruchteil des Gesamtvolumens von Partikeln, die gleich dieser Größe oder kleiner sind, eingenommen wird. So ist auch ersichtlich, daß das sphärische Pulver insgesamt nur aus Partikeln besteht, deren Größe 30µm nicht übersteigt.

Die aus der Summenkurve 1 abgeleitete Kurve 2 der Partikelgrößenverteilung besitzt ein Maximum im Bereich 10 bis 20µm und weist eine Halbwertsbreite von ebenfalls etwa 10 bis 20µm auf. Das bedeutet ein Häufigkeitsmaximum der sphärischen Partikel innerhalb dieses schmalen Größenspektrums. Damit sind weitgehende Voraussetzungen für eine optimale Packungsdichte, d.h. auch für eine optimale Raumausnutzung gegeben.

Die außerordentlich günstige Volumenkapazität einer erfindungsgemäß eingesetzten Knopfzellen-Elektrode aus sphärischem Nickelhydroxidpulver im Vergleich zu einer konventionellen Pulverpreßelektrode geht aus Figur 4 hervor. Dort sind durch Balkendiagramme die spezifischen, auf die Volumeneinheit bezogenen Kapazitäten Kᵥ[mAh/cm³] jeweils für den Zustand unmittelbar nach Elektrolytbefüllung der Zelle (a) und nach 100 Zyklen (b) augenfällig gemacht.

Im Gegensatz zu den erfindungsgemäß eingesetzten Elektroden unterliegen die gepreßten Elektroden aus konventionellem Nickelhydroxid (Partikelgröße 50 bis 300µm), sobald sie mit dem Elektrolyten in Berührung kommen, einer spontanen Quellung. Die Füllung ihres Porensystems mit Elektrolyt bewirkt einen bis zu 25% betragenden Anstieg der Elektrodenhöhe, was einen entsprechenden Abfall der Volumenkapazität zur Folge hat. Während so die Volumenkapazität der frischen konventionellen Elektrode bereits am Beginn des Zyklenbetriebes auf ca. 300mAh/cm³ abgefallen ist ((a), rechter Balken), beträgt die Anfangskapazität der positiven Elektrode aus sphärischem Ni(OH)₂-Pulver nahezu 400mAh/cm³.

Nach 100 Zyklen ist die Volumenkapazität der konventionellen Elektrode weiter bis auf ca. 270mAh/cm³ abgefallen ((b), rechter Balken). Dagegen verharrt die Elektrode gemäß Erfindung nahezu unverändert auf dem hohen Kapazitätsniveau bei 400mAh/cm³, zugleich ein Beweis für ihre Formstabilität, die sich aus der besseren Raumausnutzung der sphärischen Partikel bzw. deren geringerer Volumenbeanspruchung erklärt.

Aufgrund fehlender Quellungsneigung bringt die Preßelektrode aus sphärischem Korn eine wichtige Voraussetzung für die Erhöhung der volumetrischen Kapazität in einer Knopfzelle mit.

Hingegen muß dem beim nichtsphärischen Standardmaterial auftretenden Volumenzuwachs schon beim Bau der Zelle Rechnung getragen werden. Ein äußeres vorgegebenes Volumen kann dementsprechend nur in niedrigerem Maße ausgenutzt werden.

## Patentansprüche

1. Gasdicht verschlossener alkalischer Akkumulator in Form einer Knopfzelle mit im Zellengehäuse angeordneten, durch einen Separator getrennten positiven und negativen Elektroden, dadurch gekennzeichnet, daß die Massemischung der durch Trockenpressung hergestellten positiven Masseelektroden als aktives Material ein Nickelhydroxid mit sphärischer Komgestalt und hoher Festkörperdichte enthält, wobei die pyknometrische Dichte des sphärischen Nickelhydroxids 3,3 g/cm³ bis 3,9 g/cm³ beträgt und seine Partikelgröße mehrheitlich im Bereich 5 bis 20 µm liegt.

2. Alkalischer Akkumulator nach Anspruch 1, dadurch gekennzeichnet, daß er ein Nickelhydrid-Akkumulator ist.

3. Alkalischer Akkumulator nach Anspruch 1 und/ oder 2, dadurch gekennzeichnet, daß dem aktiven Material der positiven Masseelektroden neben metallischem Nickel und Kobalt sowie Kobalthydroxid ein pulverförmiger Kunststoffbinder zugesetzt ist.

4. Alkalischer Akkumulator nach einem der Ansprüche 1 bis 3, dadurch gekennzeichnet, daß die Massemischung für die positive Elektrode vor dem trockenen Verpressen zu Tabletten vorgranuliert ist.

5. Alkalischer Akkumulator nach Anspruch 4, dadurch gekennzeichnet, daß das Granulat eine Partikelgröße zwischen 100µm und 1000µm aufweist.

6. Alkalischer Akkumulator nach einem der Ansprüche 2 bis 5, dadurch gekennzeichnet, daß das Material der negativen Elektrode eine ein Mischmetall enthaltende Wasserstoffspeicherlegierung des Typs MmNi₅ ist.

7. Alkalischer Akkumulator nach einem der Ansprüche 1 bis 6, dadurch gekennzeichnet, daß für den Separator ein mikroporöses Material vorgesehen ist, dessen Porendurchmesser kleiner als die kleinste Partikelgröße des sphärischen Nickelhydroxids ist.

## Claims

1. A gastightly sealed alkaline storage battery in the form of a button cell having positive and negative electrodes disposed in the cell casing and separated by a separator, characterized in that the mass mixture of the positive mass electrodes produced by dry pressing contains a nickel hydroxide having spherical particle shape and high solid-state density as active material, the pycnometric density of the spherical nickel hydroxide being 3.3 g/cm³ to 3.9 g/cm³ and its particle size being mostly in the range from 5 to 20 µm.

2. An alkaline storage battery according to Claim 1, characterized in that it is a nickel hydride storage battery.

3. An alkaline storage battery according to Claim 1 and/or 2, characterized in that a powdered plastic binder is added to the active material of the positive mass electrodes in addition to metallic nickel and cobalt and also cobalt hydroxide.

4. An alkaline storage battery according to one of Claims 1 to 3, characterized in that the mass mixture for the positive electrode is pregranulated to form pellets prior to the dry pressing.

5. An alkaline storage battery according to Claim 4, characterized in that the granular material has a particle size of between 100 µm and 1000 µm.

6. An alkaline storage battery according to one of Claims 2 to 5, characterized in that the material of the negative electrode is a hydrogen storage alloy of the type MmNi₅ containing a blended metal.

7. An alkaline storage battery according to one of Claims 1 to 6, characterized in that there is provided for the separator a microporous material whose pore diameter is less than the smallest particle size of the spherical nickel hydroxide.

## Revendications

1. Accumulateur alcalin scellé étanche aux gaz sous forme d'une pile-bouton avec des électrodes positives et négatives séparées par un séparateur, placées dans le boîtier de cellule,
caractérisé en ce que
le mélange de masse des électrodes de masses positives produites par compression à sec contient comme matériau actif un hydroxyde de nickel à forme de grain sphérique et à densité élevée de corps solide, où la densité pycnométrique de l'hydroxyde de nickel sphérique représente 3,3 g/cm³ jusqu'à 3,9 g/cm³ et sa taille de particule se trouve répartie dans l'intervalle de 5 à 20 µm.

2. Accumulateur alcalin selon la revendication 1,
caractérisé en ce qu'
il est un accumulateur nickel-hydrure.

3. Accumulateur alcalin selon la revendication 1 et/ou 2,
caractérisé en ce qu'
on ajoute au matériau actif de l'électrode de masse positive un liant de matière plastique pulvérulent en plus du nickel et du cobalt métalliques ainsi que de l'hydroxyde de cobalt.

4. Accumulateur alcalin selon l'une des revendications 1 à 3,
caractérisé en ce qu'
on prégranule le mélange de masse pour l'électrode positive avant la compression à sec en comprimés.

5. Accumulateur alcalin selon la revendication 4,
caractérisé en ce que
le granulé présente une taille de particule comprise entre 100 µm et 1000 µm.

6. Accumulateur alcalin selon l'une des revendications 2 à 5,
caractérisé en ce que
le matériau de l'électrode négative est un alliage du type MmNi₅ accumulant de l'hydrogène contenant du mischmétal.

7. Accumulateur alcalin selon l'une des revendications 1 à 6,
caractérisé en ce qu'
on prévoit un matériau microporeux pour le séparateur, dont le diamètre de pore est plus petit que la taille de particule la plus faible de l'hydroxyde de nickel sphérique.
